# EUROPEAN PATENT SPECIFICATION

(11) **EP 3 904 032 B1**
(45) Date of publication and mention of the grant of the patent: **22.05.2024**
(21) Application number: 19905301.8
(22) Date of filing: 06.12.2019
(51) Int. Cl.: B29B 15/12, B29K 105/10, D04H 3/04

(54) **RESIN-INTEGRATED CARBON FIBER SHEET, METHOD FOR PRODUCING A RESIN-INTEGRATED CARBON FIBER SHEET AND METHOD FOR PRODUCING A FIBER REINFORCED RESIN MOLDED PRODUCT**
HARZINTEGRIERTE CARBONFASER-BAHN, VERFAHREN ZUM HERSTELLEN EINER HARZINTEGRIERTE CARBONFASER-BAHN UND VERFAHREN ZUM HERSTELLEN EINES FASERVERSTÄRKTEN HARZFORMPRODUKTS
FEUILLE DE FIBRE DE CARBONE INTÉGRÉE DANS UNE RÉSINE, MÉTHODE DE PRODUCTION D'UNE FEUILLE DE FIBRE DE CARBONE INTÉGRÉE DANS UNE RÉSINE ET PROCÉDÉ DE PRODUCTION D'UN PRODUIT MOULÉ EN RÉSINE RENFORCÉE DE FIBRES

(30) Priority: 28.12.2018 JP 2018247673
(43) Date of publication of application: 03.11.2021
(73) Proprietor: Kurashiki Boseki Kabushiki Kaisha, Kurashiki-shi, Okayama 710-0054 (JP)
(72) Inventor: TANAKA Tadaharu, Neyagawa-shi, Osaka 572-0823 (JP); HORIMOTO Wataru, Neyagawa-shi, Osaka 572-0823 (JP); HIRAISHI Yoichi, Neyagawa-shi, Osaka 572-0823 (JP); NAKAMURA Takashi, Chuo-ku Osaka-shi, Osaka 541-8581 (JP); NAKAME Yuta, Neyagawa-shi, Osaka 572-0823 (JP); KOMAI Yuki, Chuo-ku Osaka-shi, Osaka 541-8581 (JP)
(74) Representative: Diehl & Partner
(86) International application number: PCT/JP2019/047788
(87) International publication number: WO 2020/137442

(56) References cited:
- WO-A1-2013/099741
- WO-A1-2018/038033
- JP-A- 2005 163 223
- JP-A- 2013 522 412
- US-A1- 2014 370 237

## Description

### Technical Field

The present invention relates to a resin-integrated fiber reinforced sheet for use in a fiber reinforced composite, and a production method of the same.

### Background Art

Fiber reinforced plastics (FRPs) are finding various applications because of their characteristics of high strength and light weight. The FRPs are applied as materials for automobiles, airplanes, and ships, for example. In addition to high strength and light weight, high toughness (tenacity) and high impact resistance are desired for these materials. To improve toughness and impact resistance, resins for FRPs are now shifting from thermosetting resins to thermoplastic resins because molded products made from thermoplastic resins have higher toughness (tenacity) and higher impact resistance than those made from thermosetting resins. As fibers for FRPs, glass fibers, carbon fibers, and aramid fibers are in high demand, and particularly carbon fibers are growing in demand. The FRP molding may take multi-stage molding processes mainly composed of the following two molding processes: forming prepregs by impregnating fiber bundles with resin (first process); and forming a molded product by stacking and unifying the prepregs (second process). The reason why these processes are taken is the high viscosity of resins. Generally, resins have high viscosity, in particular thermoplastic resins have higher viscosity than thermosetting resins, which makes their impregnation into fibers difficult. To promote impregnation of resin into fiber bundles in the first process, spread fiber sheets for semipregs have come out recently, which have low mass and are prepared by spreading fiber bundles. The lower the mass of the spread fiber sheets, the easier it is for the thermoplastic resins to be impregnated. Therefore, semipregs for FRPs using spread fiber sheets are drawing attention in the market. Patent Documents 1 and 2 propose prepregs using carbon fiber sheets with less fluff. Patent Documents 3 and 4 propose semipregs semi-impregnated or not impregnated with resin, which are prepared by electrostatically coating carbon fiber sheets with thermoplastic resin powder, heating the resin above the softening point in a pressure-free state, and cooling it.
Patent Document 5 discloses a self-supporting fibrous material, the fibers of which have been treated with a binder composition. It further discloses forming therefrom preforms which are configured to receive a matrix resins by resin infusion.

### Prior Art Documents

### Patent Documents

Patent Document 1: JP 2015-221867 A
Patent Document 2: JP 2001-288639 A
Patent Document 3: WO 2016/152856
Patent Document 4: JP 2017-190439 A
Patent Document 5: US 2014/0370237 A1

### Disclosure of Invention

### Problem to be Solved by the Invention

However, thin spread fiber reinforced sheets produced by the conventional techniques are low in strength in the width direction and difficult to handle.

To solve the above problems, the present invention provides a resin-integrated fiber reinforced sheet including thin spread fiber reinforced sheets that is strong in the width direction, high in cleavage resistance and excellent in handleability, and a production method of the same.

### Means for Solving Problem

The above object is solved by the combination of features of the independent claims. Preferred embodiments are defined in dependent claims.

The first aspect of the present invention according to claim 1 relates to a fiber reinforced sheet, including: a fiber reinforced sheet in which a reinforcing fiber filament group is spread and arrayed in parallel in one direction; a shape retaining material that retains the fiber reinforced sheet; and bridging fibers. One or more of the bridging fibers is present on average on a surface of the fiber reinforced sheet in a direction across the fiber reinforced sheet per 10 mm² of the sheet, and the shape retaining material retains the fiber reinforced sheet in a state in which the bridging fibers are present on the surface of the fiber reinforced sheet.

The second aspect of the present invention according to claim 10 relates to a method of manufacturing a resin-integrated carbon fiber sheet, including: a carbon fiber sheet in which a carbon fiber filament group is spread and arrayed in parallel in one direction; resin that is present on part of a surface of the carbon fiber sheet; and bridging fibers. One or more of the bridging fibers is present on average on a surface of the carbon fiber sheet in a direction across the carbon fiber sheet per 10 mm² of the sheet, and the resin on the surface adhesively fixes the bridging fibers to the carbon fiber sheet.

A method for producing a fiber reinforced resin molded product is disclosed in claim 14.

### Effects of the Invention

In the present invention, one or more of the bridging fibers is present on average on a surface of the fiber reinforced sheet in a direction across the fiber reinforced sheet per 10 mm² of the sheet, and the resin on the surface adhesively fixes the bridging fibers to the fiber reinforced sheet. Thereby, it is possible to provide a resin-integrated fiber reinforced sheet that is strong in the width direction, high in cleavage resistance, and excellent in handleability. Moreover, in the production method of the present invention, bridging fibers are generated from the reinforcing fiber filament group or bridging fibers are dropped on the fiber reinforced sheet during or after spreading of the reinforcing fiber filament group so that the resin adhesively fixes the bridging fibers to the fiber reinforced sheet. In this manner, it is possible to efficiently produce a resin-integrated fiber reinforced sheet of the present invention.

### Brief Description of Drawings

[FIG. 1] FIG. 1 is a schematic plan view of a resin-integrated carbon fiber sheet according to an embodiment of the present invention.
[FIG. 2] FIG. 2 is a schematic widthwise cross-sectional view of the resin-integrated carbon fiber sheet.
[FIG. 3] FIG. 3 is a schematic process diagram illustrating a production method of a resin-integrated carbon fiber sheet according to an embodiment of the present invention.
[FIG. 4] FIG. 4 is a schematic process diagram illustrating a production method of a resin-integrated carbon fiber sheet according to another embodiment of the present invention.
[FIG. 5] FIGS. 5A to 5D are schematic explanatory views each illustrating a spreading device according to an embodiment of the present invention.
[FIG. 6] FIG. 6 is a partially enlarged perspective view of FIG. 5B.
[FIG. 7] FIG. 7 is an explanatory view illustrating plan photograph shooting spots on the resin-integrated carbon fiber sheet.
[FIG. 8] FIG. 8 shows plan photographs of the left side of the resin-integrated carbon fiber sheet illustrated in FIG. 7 (each photograph: 50X magnification).
[FIG. 9] FIG. 9 shows plan photographs of the center of the resin-integrated carbon fiber sheet illustrated in FIG. 7 (each photograph: 50X magnification).
[FIG. 10] FIG. 10 shows plan photographs of the right side of the resin-integrated carbon fiber sheet illustrated in FIG. 7 (each photograph: 50X magnification).
[FIG. 11] FIG. 11 is an explanatory view of bridging fibers present in 10 mm² of the sheet.

### Description of the Invention

It is desired to reduce the mass of spread fiber sheets for FRP semipregs. Spread fiber sheets with reduced mass can prevent impregnation failure and cut impregnation time. However, such low-mass spread fiber sheets have lower cleavage resistance. The low-mass spread fiber sheets cleave easily, and break or tear by an impact during resin impregnation process or transportation. In short, the handleability is extremely poor. The semipregs are sheets prepared by not fully impregnating spread fiber sheets with resin, i.e., spread fiber bundles are simply fixed with matrix resin (e.g., powder). The lateral adhesion lowers as the mass decreases. Therefore, spread fiber sheets having low mass and high lateral adhesion while having high cleavage resistance are demanded.

Meanwhile, as proposed in Patent Documents 1 and 2, it is a common technical knowledge that the amount of fluff should be minimized because carbon fiber sheets with less fluff have high strength.

Against this common technical knowledge, the present inventors dared to make bridging fibers present in the width direction of a thin spread fiber reinforced sheet and make them adhesively fixed with resin on the surface as a shape retaining material. Surprisingly, the resultant resin-integrated fiber reinforced sheet was strong in the width direction and had improved handleability. Specifically, the present inventors found that generating bridging fibers or dropping reinforcing fibers that are comparable to bridging fibers contribute to the improvement in strength in the width direction and handleability, even if the orientation of the reinforcing fibers is partially sacrificed. Exemplary reinforcing fibers of the present invention include carbon fibers, aramid fibers, and glass fiber. Hereinafter, carbon fibers will be described as a specific example.

The resin-integrated carbon fiber sheet of the present invention is a resin-integrated carbon fiber sheet in which a carbon fiber filament group is spread and arrayed in parallel in one direction. The carbon fiber filament group refers to a bundle of a large number of carbon fiber filaments (hereinafter, also referred to as a "carbon fiber tow before spreading"). The term "spreading" means that a large number of carbon fibers in a tow are spread apart in the width direction and formed into a thin sheet shape or a tape shape. The thickness is preferably 0.02 to 0.4 mm, and more preferably 0.02 to 0.3 mm. The carbon fiber tow before spreading used in the present invention is preferably 3 to 60K, and more preferably 12 to 60K. The K value indicates 1000 filaments. A commercially available large tow (e.g., 50K for 50000 filaments) generally has a width of about 12 mm.

One or more of the bridging fibers is present on average on a surface of the carbon fiber sheet in a direction across the carbon fiber sheet per 10 mm² of the resin-integrated carbon fiber sheet. The number of the bridging fibers is preferably 5 to 300, more preferably 10 to 200, further preferably 25 to 150, and still further preferably 30 to 135 on average per 10 mm² of the resin-integrated carbon fiber sheet. Within the above number, strength in the width direction is high, and handleability is excellent. The angle of the bridging fibers is not particularly limited as long as it is a direction across the arrayed direction of the carbon fibers and above 0 degree and below 180 degrees relative to the arrayed direction of the carbon fibers. Although the most efficient angle of the bridging fibers is 90 degrees, the angle of the bridging fibers is difficult to control and hence it may be any direction.

The resin is present on part of the surface of the carbon fiber sheet, and the bridging fibers are adhesively fixed with the resin on the surface to the carbon fiber sheet. This makes the carbon fiber sheet strong in the width direction and excellent in handleability.

The bridging fibers are preferably at least one selected from the group consisting of carbon fibers separated from the carbon fiber filament group and carbon fibers dropped on the carbon fiber sheet. The bridging fibers function as described above.

The bridging fibers may be present either on one surface or both surfaces of the carbon fiber sheet. It is preferred that the bridging fibers are present on both surfaces of the carbon fiber sheet from the viewpoint of improving the strength in the width direction and handleability. It is preferred that the bridging fibers are present also inside the carbon fiber sheet in the direction across the carbon fiber sheet. The bridging fibers may be partially present on the surface of the carbon fiber sheet and partially present inside the carbon fiber sheet.

The resin as a shape retaining material is preferably at least one selected from the group consisting of thermoplastic resin and thermosetting resin. Examples of the thermoplastic resin include, but are not particularly limited to, polyolefin resin such as polyethylene or polypropylene, nylon (polyamide) resin, polyimide resin, polyester resin, polycarbonate resin, polyether ether ketone resin, polyether ketone ketone resin, and phenoxy resin. Examples of the thermosetting resin include, but are not particularly limited to, epoxy resin, unsaturated polyester resin, phenol resin, and melamine resin. Of these, thermoplastic resin is preferred.

The shape retaining material is not particularly limited as long as it is a resin in the form of a film, non-woven fabric, net, powder and the like that can retain the shape of the sheet. From the viewpoint of handling, the shape retaining material is preferably in the form of powder, particularly preferably resin powder that serves as a matrix resin.

The adhesion state of the resin of the resin-integrated carbon fiber sheet of the present invention is such that resin melt-solidified adheres to the surface of the spread carbon fiber sheet, and the resin is not impregnated inside the carbon fiber sheet or partially impregnated in the carbon fiber sheet. The resin-integrated carbon fiber sheet with the above adhesion state of the resin can be suitably formed into a fiber reinforced resin molded product by applying heat and pressure on a plurality of stacked resin-integrated carbon fiber sheets.

The resin-integrated carbon fiber sheet contains the bridging fibers in an amount of 0.01 to 25% by mass, preferably 0.1 to 25% by mass, more preferably 1 to 25% by mass, and further preferably 5 to 15% by mass with respect to 100% by mass of the carbon fibers. Within the above proportion of the bridging fibers, the carbon fiber sheet can be strong in the width direction, high in cleavage resistance, and excellent in handleability.

The "% by mass" of the bridging fibers generated from the carbon fiber filament group was calculated by measuring the amount of the bridging fibers exposed to the surfaces of the spread fiber sheet. In the measurement, the spread fiber sheet was cut into a predetermined size, and only bridging fibers exposed to the surfaces of the sample were carefully taken out from the sample. The mass of the bridging fibers was measured with an electronic balance to calculate the amount of the bridging fibers per unit area (g/m²).

The resin-integrated carbon fiber sheet contains the fibers in an amount of 30 to 70% by volume, more preferably 35 to 65% by volume, and further preferably 40 to 60% by volume with respect to 100% by volume of the resin-integrated carbon fiber sheet. Within the above proportion, the resin-integrated carbon fiber sheet can be suitably used as a carbon fiber reinforced resin intermediate for a fiber reinforced resin molded product, which is formed by applying heat and pressure on a plurality of stacked resin-integrated carbon fiber sheets. The mass of the resin-integrated carbon fiber sheet is preferably 10 to 3000 g/m², more preferably 20 to 2000g/m², and further preferably 30 to 1000 g/m².

The resin on the surface of the resin-integrated carbon fiber sheet is a resin that becomes a matrix resin through formation of the carbon fiber sheet. With this configuration, the resin-integrated carbon fiber sheet can be formed into a fiber reinforced resin molded product by applying heat and pressure on a plurality of stacked resin-integrated carbon fiber sheets.

The width of the carbon fiber sheet (hereinafter, also referred to as a "spread fiber sheet") is preferably 0.1 to 5.0 mm per 1000 constituent fibers. Specifically, when a large tow (e.g., 50K or 60K) is used, the spread fiber sheet has a width of about 0.1 to 1.5 mm per 1000 constituent fibers. When a regular tow (e.g., 12K or 15K) is used, the spread fiber sheet has a width of about 0.5 to 5.0 mm per 1000 constituent fibers. The larger the number of fibers in a tow, the more likely that the fibers will be twisted, and the tow will not be spread easily. The width of the spread fiber sheet becomes narrower accordingly. In the method of the present invention, tows before spreading available from carbon fiber manufacturers can be opened and formed into easy-to-use spread fiber sheets, which can be used in various molded products. It is preferred that the carbon fiber bundle (tow) as feed yarns includes 5,000 to 50,000 fibers per bundle, and the number of the carbon fiber bundles (tows) to be fed is 10 to 280. When a plurality of carbon fiber bundles (tows) are fed and spread in this way to form a single sheet, spaces between the carbon fiber bundles (tows) tend to cleave. Bridging fibers lying in various directions and being adhesively fixed to the sheet with resin can prevent such cleavage between the tows.

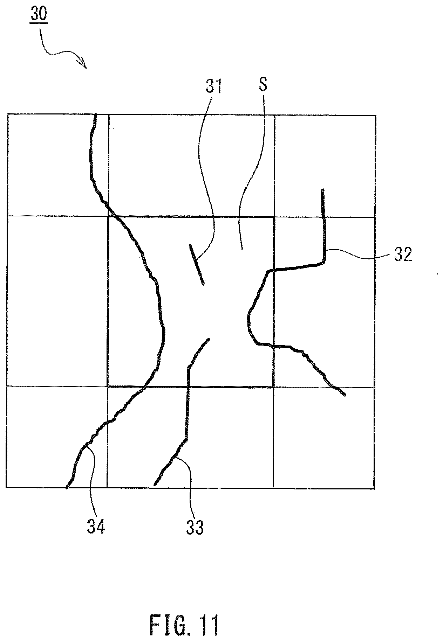

The average length of the bridging fibers is preferably 1 mm or more, and more preferably 5 mm or more. Within the above range of the average length of the bridging fibers, the carbon fiber sheet can be strong in the width direction and excellent in handleability. The bridging fibers have any of the following four forms as illustrated in FIG. 11: a) a short fiber 31 with both ends cut; b) a long fiber 32 with both ends cut; c) a long fiber 33 with one end cut; and d) a long fiber 34 with neither end cut. A reference numeral 30 denotes a resin-integrated carbon fiber sheet, and S denotes an area of 10 mm².

The production method of the resin-integrated carbon fiber sheet of the present invention includes the following processes.
A: Spreading a carbon fiber filament group by at least one selected from the group consisting of passage through a plurality of rollers, passage through a spreading bar, and air spreading, and arraying the spread carbon fiber filament group in parallel in one direction; and generating bridging fibers from the carbon fiber filament group during or after spreading of the carbon fiber filament group or dropping bridging fibers on the carbon fiber sheet during or after spreading of the carbon fiber filament group so that one or more of the bridging fibers is present on average per 10 mm² of the carbon fiber sheet. In the case of adopting passage through rollers or a spreading bar for spreading the carbon fiber filament group, the bridging fibers can be generated from the carbon fiber filament group by tensioning the carbon fiber filament group during spreading. The tension of the carbon fiber filament group may be in a range from 2.5 to 30 N per 15,000 filaments, for example. In the case of adopting air spreading, it is preferred that the bridging fibers are generated by rollers or a spreading bar after air spreading. When the bridging fibers are generated from the carbon fiber filament group, the bridging fibers are in a state of crossing carbon fibers constituting the carbon fiber sheet. Here, crossing includes tangling. For example, the bridging fibers are partially or entirely present inside the carbon fiber sheet and stereoscopically cross the carbon fibers arrayed in one direction. The production method of the present invention further includes the following processes.
B: Applying resin powder to the carbon fiber sheet; and
C: heat-melting the resin powder in a pressure-free state (no pressure applied) and cooling it so that the resin is present on part of a surface of the carbon fiber sheet. At this time, the resin on the surface adhesively fixes the bridging fibers to the carbon fiber sheet.

An exemplary method for producing the resin-integrated carbon fiber sheet of the present invention will be described specifically with reference to drawings. In the drawings, the same reference numerals are assigned to the same components.

### <Air Spreading Process + Bridging Fiber Generating Process + Resin Powder Applying Process>

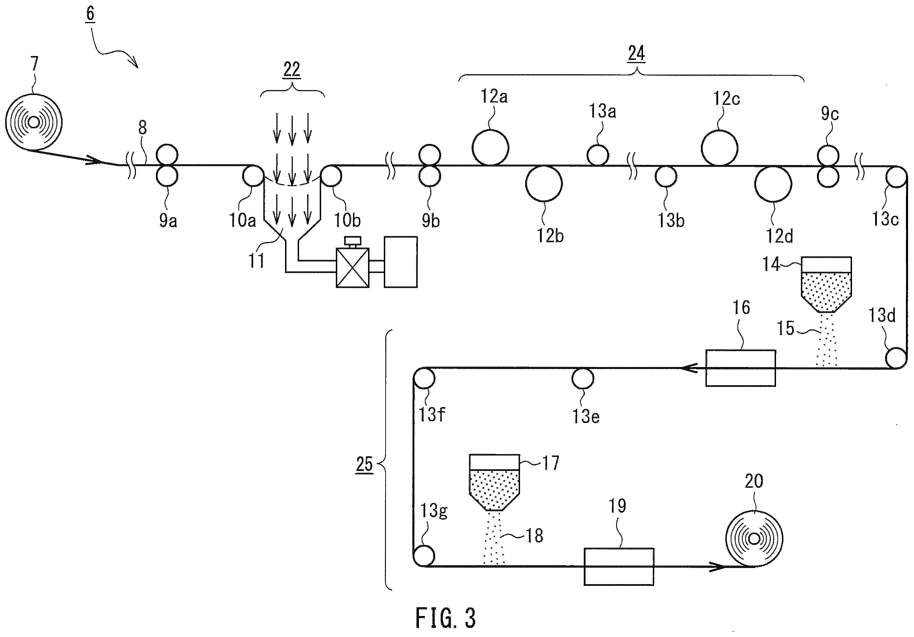

As illustrated in FIG. 3, carbon fiber filament groups 8 are nipped between a plurality of nip rollers 9a and 9b, between which a deflection space 11 is provided between holding rollers 10a and 10b. The carbon fiber filament groups 8 are conveyed while air inside the deflection space 11 is being withdrawn. Thus, the carbon fiber filament groups 8 are spread (air spreading process 22). The number of the deflection space 11 may be one or two or more. The carbon fiber filament groups 8 are constituted by tows gathered from a plurality of feed bobbins 7.

After the spreading process, the spread tows are nipped between the nip rollers 9b and 9c and conveyed between a plurality of bridge rollers 12a to 12d disposed therebetween while being tensioned at, e.g., 2.5 to 30 N per 15,000 filaments (corresponding to a carbon fiber filament group fed from one feed bobbin) to generate bridging fibers (bridging fiber generating process 24). The bridge rollers may rotate or vibrate in the width direction. The bridge rollers may have, e.g., a pearskin finish surface, an uneven surface or a mirror surface, and generate bridging fibers through bending, fixation, rotation, vibration or a combination of these, of the carbon fiber filament groups. Reference numerals 13a to 13g denote guide rollers.

Then, dry resin powder 15 is sprinkled on the front surface of the spread fiber sheet from a powder feed hopper 14, and the sheet is fed into a heater 16 in a pressure-free state to heat and melt the dry resin powder 15 and cooled between the guide rollers 13f and 13g. Thereafter, dry resin powder 18 is sprinkled on the back surface of the spread fiber sheet from a powder feed hopper 17, and the sheet is fed into a heater 19 in a pressure-free state to heat and melt the dry resin powder 18, and cooled and taken up on a take-up roller 20 (resin powder applying process 25). The dry resin powders 15 and 18 are, e.g., phenoxy resin (softening point: 180°C), the temperatures inside the heaters 16 and 19 are 20°C to 60°C higher than the melting point or softening point of the resin, and the residence times therein are 4 seconds each. Thus, the spread carbon fiber sheet can be strong in the width direction and handled as a sheet without separation of the constituent carbon fibers.

### <Roller Spreading Process (+ Bridging Fiber Generating Process) + Resin Powder Applying Process>

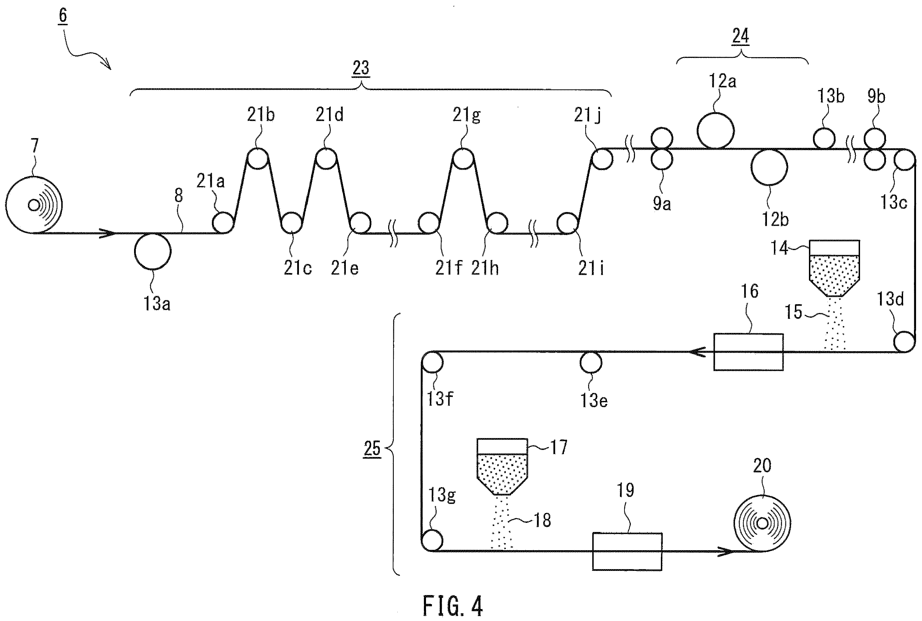

As illustrated in FIG. 4, the carbon fiber filament groups 8 are conveyed between spreading rollers 21a to 21j to generate bridging fibers during spreading (roller spreading process 23). The spreading rollers may be fixed, rotate, or vibrate in the width direction.

If the amount of the generated bridging fibers is small, bridging fibers are generated by nipping the spread tows between the nip rollers 9a and 9b and conveying them between a plurality of bridge rollers 12a and 12b disposed therebetween while tensioning the tows at, e.g., 2.5 to 30 N per 15,000 filaments (bridging fiber generating process 24). The bridging fiber generating process 24 is unnecessary if the roller spreading process 23 can yield a sufficient amount of the bridging fibers. Then, the carbon fiber filament groups 8 undergo the resin powder applying process 25 in the same manner as in the process illustrated in FIG. 3.

### <Bridge Rollers>

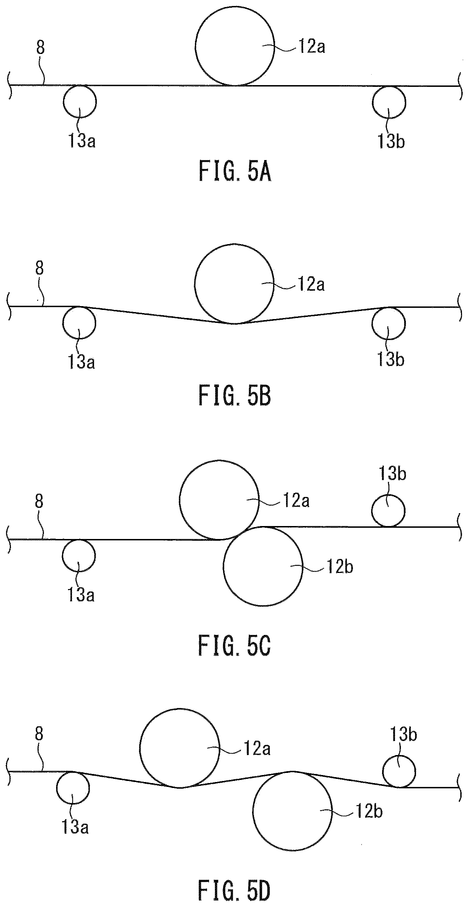

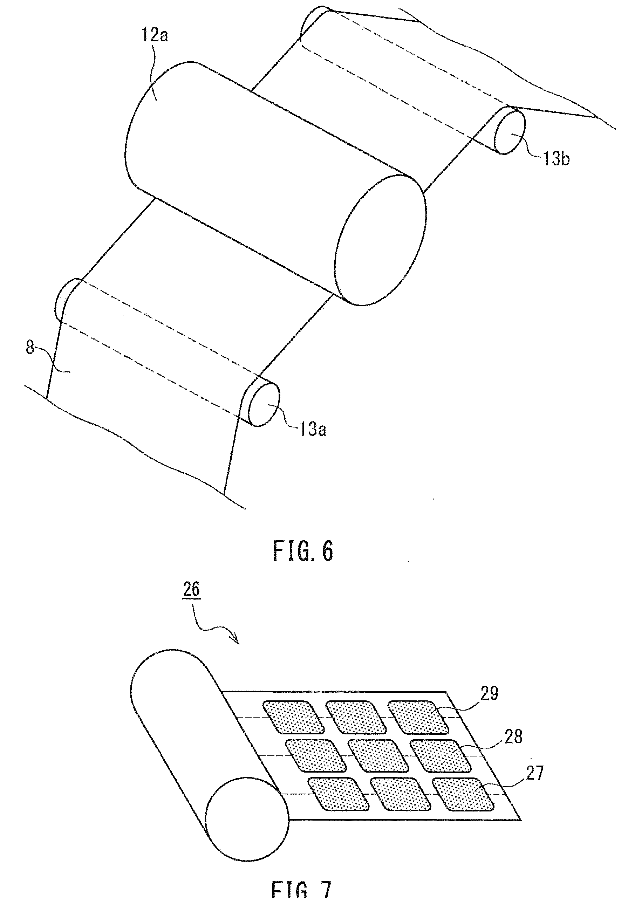

In addition to the bridge rollers illustrated in FIGS. 3 and 4, bridge rollers illustrated in FIGS. 5A to 5D can also be used. FIG. 5A illustrates an example in which the bridge roller 12a disposed between the guide rollers 13a and 13b contacts the carbon fiber filament groups 8. FIG. 5B illustrates an example in which the bridge roller 12a disposed between the guide rollers 13a and 13b bends the carbon fiber filament groups 8. FIG. 5C illustrates an example in which the bridge rollers 12a and 12b disposed between the guide rollers 13a and 13b nip the carbon fiber filament groups 8. FIG. 5D illustrates an example in which the bridge rollers 12a and 12b disposed between the guide rollers 13a and 13b bend the carbon fiber filament groups 8. In this manner, the bridging fibers can be generated by bringing the carbon fiber filament groups into contact with the bridge rollers or bending the carbon fiber filament groups while passing therethrough. The bridge rollers 12a and 12b may be fixed, rotate, or vibrate in the width direction. FIG. 6 is a perspective view of FIG. 5B.

### <Bar Spreading Process + Resin Powder Applying Process>

As a modified example of the embodiment of FIG. 4, the spreading rollers 21a to 21j may be replaced with spreading bars. The position of the spreading bars can be changed. The spreading bar is, e.g., a plate-like body having a length long enough to come into contact with the full width (in the width direction) of the tows and having a predetermined thickness. The part that comes into contact with the tows has a curved surface, and the bar as a whole has a vertically elongated oval cross section. The main portion of a spreading device 6 includes one set of a spreading bar for holding tows (fixed spreading bar) and a spreading bar that vibrates in the width direction of the tows (vibrating spreading bar). Alternatively, the main portion may include a plurality of sets of the spreading bars. Carbon fiber tows 8 are fed from the feed bobbins 7 and pass through the fixed spreading bar and the vibrating spreading bar while being bent. The tows 8 vibrate in the width direction by the vibrating spreading bar while being held by the fixed spreading bar. Thus, the tows 8 are opened and spread in the width direction to form a spread fiber sheet. As a preferred embodiment, two fixed spreading bars are disposed on the upper and lower sides, and tows are fed from the two directions of the upper and lower sides of the fixed spreading bars to make the tows separately pass over or under the vibrating spreading bar to spread the tows. The tows fed from the feed bobbins can be spread individually in the spreading process. At this time, when one tow passes over the fixed spreading bar located on the lower side, it passes under the vibrating spreading bar, and another tow positioned next to said tow passes under the fixed spreading bar located on the upper side and passes under the vibrating spreading bar. In this mode, the fiber tows are opened and spread in the width direction of one fiber tow, and after spreading, spread tows are arrayed in a row in a sheet shape on the guide roller 13a. After passage through a guide roller 13b, a spread carbon fiber sheet is formed. This process does not include the bridging fiber generating process 24. Then, the dry resin powder 15 is sprinkled on the front surface of the spread fiber sheet from the powder feed hopper 14, fed into the heater 16 in a pressure-free state to heat and melt the dry resin powder 15, and cooled between the guide rollers 13e to 13g. Thereafter, dry resin powder 18 is sprinkled on the back surface of the spread fiber sheet from a powder feed hopper 17, and the sheet is fed into a heater 19 in a pressure-free state to heat and melt the dry resin powder 18, and cooled and taken up on a take-up roller 20 (resin powder applying process 25). It is preferred that the dry resin powders 15 and 18 are thermoplastic resin, the temperatures inside the heaters 16 and 19 are 5°C to 60°C higher than the melting point or softening point of the resin, and the residence times therein are 2 to 60 seconds each. The thermoplastic dry resin powder melts on the surface of the spread carbon fiber sheet and solidifies after passing through the heater to fix the bridging fibers. Thereby, the spread carbon fiber sheet can be strong in the width direction and handled as one sheet without separation of the constituent carbon fibers.

The bridging fibers may be dropped on the carbon fiber sheet during or after spreading of the carbon fiber filament groups. The bridging fibers dropping process may be performed before or after the resin powder applying process.

For application of the resin powder, powder coating, electrostatic coating, spraying, fluidized-bed coating or the like may be adopted. Powder coating is preferred in which resin powder is dropped on the surface of a carbon fiber sheet. For example, dry resin powder is sprinkled on a carbon fiber sheet.

It is preferred that a plurality of carbon fiber filament groups, each being wound on a bobbin, are fed, and opened and spread in the width direction of the tows, and thereafter bridging fibers are generated by bridge rollers to form a single spread carbon fiber resin sheet that is not fully impregnated with resin. This is a semipreg. By this method, bridging fibers are generated that are separated from the carbon fiber filament groups. In the spreading process, it is preferable to tension the carbon fiber filament groups to generate bridging fibers from the carbon fiber filament groups. The bridging fibers cross the carbon fibers constituting the carbon fiber sheet. The tension of the carbon fiber filament groups in the spreading process is set at, e.g., 2.5 N or more per 15,000 filaments to generate bridging fibers from the carbon fiber filament groups. A preferable tension is 3.0 N or more per 15,000 filaments. With this tension, bridging fibers are generated easily.

The surface of the bridge rollers that comes into contact with the carbon fiber filament groups is preferably a curved surface, and the cross section thereof may be, e.g., circular, elliptical, or oval. The bridge rollers with corners may cut filaments when the carbon fiber filament groups are brought into contact with the bridge rollers. The bridge rollers may have a pearskin finish surface with concavities and convexities, or a mirror surface without concavities and convexities.

The mode of generating the bridging fibers by the bridge rollers is not particularly limited as long as the bridging fibers are generated. The bridging fibers are generated by friction caused when the bridge rollers come into contact with the spread carbon fiber filament groups. One bridge roller may be disposed to push against the spread carbon fiber filament groups. At this time, the bridge roller may be fixed, rotate, or vibrate. The bridging fibers of the present invention are not fibers generated incidentally due to tension, deflection, or the like.

As another mode, two guide rollers may be disposed, and a bridge roller may be disposed therebetween to push against the spread carbon fiber filament groups while the carbon fiber filament groups pass therethrough. At this time, the bridge roller may be disposed either on the upper surface or the lower surface. Two bridge rollers may be disposed on the upper surface and the lower surface.

As still another mode, two bridge rollers may be disposed to press the spread carbon fiber filament groups while the carbon fiber filament groups pass therethrough. At this time, the bridge rollers may rotate.

As still another mode, two guide rollers may be disposed, and a bridge roller vibrating in the width direction may be disposed therebetween to push against the spread carbon fiber filament groups while the carbon fiber filament groups pass therethrough. At this time, the bridge roller may be disposed either on the upper surface or the lower surface. Two bridge rollers may be disposed on the upper surface and the lower surface.

As still another mode, the spreading bar may function as the bridge roller during spreading. Specifically, when the carbon fiber filament groups are brought into contact with the spreading bar while passing therethrough, the carbon fiber filament groups may be tensioned (e.g., 2.5 to 30 N per 15,000 filaments) during the spreading process to generate bridging fibers from the carbon fiber filament groups. The number of the spreading bar that functions as the bridge roller may be one or two or more. The spreading bar may vibrate in the width direction. At this time, the spreading bar may be disposed either on the upper surface or the lower surface. Two spreading bars may be disposed on the upper surface and the lower surface.

The spreading bars and the bridge rollers can efficiently control the generation of the bridging fibers. The carbon fiber sheet of the present invention is preferably a carbon fiber reinforced resin intermediate for a fiber reinforced resin molded product, which is formed by applying heat and pressure on a plurality of stacked carbon fiber sheets. A fiber reinforced resin molded product also can be formed from one carbon fiber sheet of the present invention.

In the spreading process, the carbon fiber filament groups (carbon fiber tows before spreading) are preferably spread by one or more sets of spreading devices, each set including a spreading bar for bending and conveying tows (fixed spreading bar) and a spreading bar that vibrates in the width direction of the tows (vibrating spreading bar). The tows vibrate in the width direction by the vibrating spreading bar while being held by the fixed spreading bar. Thus, the tows are opened and spread in the width direction. The spreading bar is a plate-like body having a length long enough to come into contact with the full width (in the width direction) of the tows and having a predetermined thickness. The part that comes into contact with the tows has a curved surface. The spreading bar preferably has a circular, elliptical, or oval cross section. Among them, the oval cross section is preferred. In particular, the spreading bar preferably has a vertically elongated oval cross section because its upper and lower surfaces may come into contact with the tows. It is preferred that the spreading process uses 2 to 4 sets of spreading devices, each set including the fixed spreading bar and the vibrating spreading bar. With this configuration, the tows can be spread efficiently.

A difference in height ΔH between the end of the fixed spreading bar (the part that comes into contact with the tows) that bends and conveys the carbon fiber filament groups (carbon fiber tows before spreading) and the end of the vibrating spreading bar (the part that comes into contact with the tows) in the spreading process is preferably 5 to 30 mm, and more preferably 8 to 20 mm. The carbon fiber tows are bent by an amount corresponding to the difference in height ΔH and pass therethrough, so that they are brought into contact with the surface of the vibrating spreading bar and spread easily. The difference in height ΔH may be large at the beginning and gradually become smaller. The operating amplitude of the spreading bar is preferably 1 to 20 mm, and more preferably 2 to 10 mm. The operating frequency of the spreading bar is preferably 10 to 100 Hz, and more preferably 15 to 50 Hz. Thus, the tows can be spread efficiently.

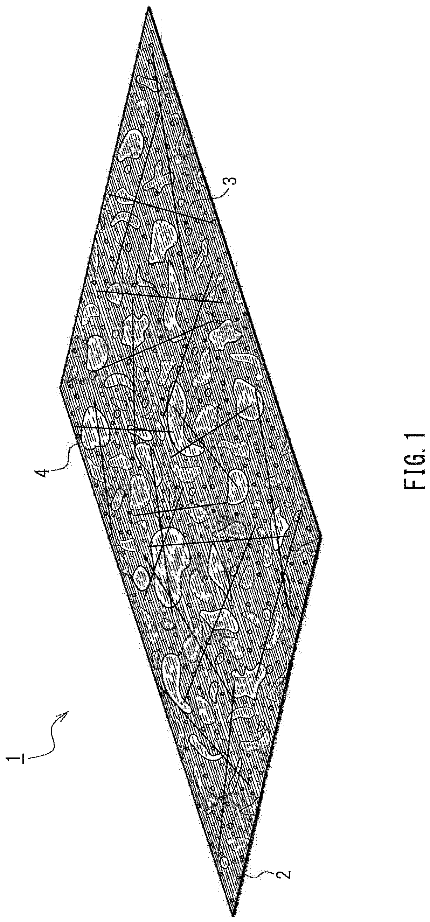

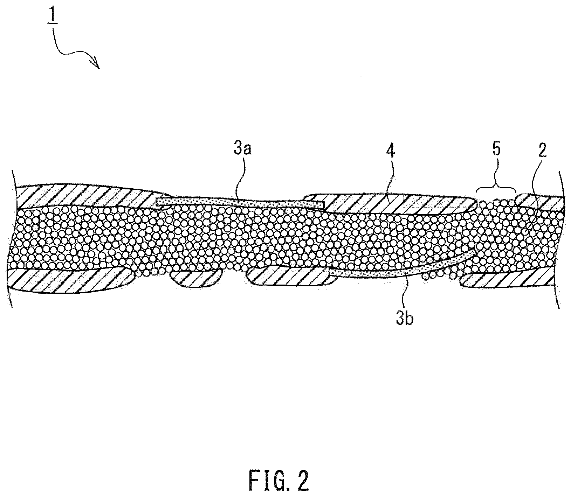

FIG. 1 is a schematic plan view of a resin-integrated carbon fiber sheet 1 according to an embodiment of the present invention, and FIG. 2 is a schematic widthwise cross-sectional view of the resin-integrated carbon fiber sheet 1. Bridging fibers 3 are disposed in various directions on the surface of a spread carbon fiber sheet 2. Melt-solidified resin 4 adheres to the surface of the carbon fiber sheet 2. The resin 4 is not impregnated inside the carbon fiber sheet 2 or partially impregnated in the carbon fiber sheet 2. The resin 4 fixes the bridging fibers 3 adhesively to the surface of the carbon fiber sheet 2. As illustrated in FIG. 2, bridging fibers 3a and 3b are present on the surfaces of the carbon fiber sheet 2. The bridging fiber 3a entirely lies on the surface of the carbon fiber sheet 2. This indicates a case in which cut fibers are dropped on the carbon fiber sheet. The bridging fiber 3b is partially present on the surface of the carbon fiber sheet 2, and partially enters the carbon fiber sheet 2 and crosses carbon fibers. This indicates a case in which bridging fibers are generated during or after tow spreading. The resin 4 fixes the bridging fibers 3 adhesively to the surface of the carbon fiber sheet 2. The carbon fiber sheet 2 includes parts to which the resin 4 adheres and parts 5 to which the resin 4 does not adhere. The parts 5 to which the resin does not adhere serve as paths through which air inside the fiber sheet escapes during formation of a fiber reinforced resin molded product by applying heat and pressure on a plurality of stacked resin-integrated carbon fiber sheets 1. The application of pressure enables the surface resin to be easily impregnated into the entire fiber sheet. As a result, the resin 4 becomes a matrix resin of the carbon fiber sheet 2.

### Examples

Hereinafter, the present invention will be described specifically by way of examples. However, the present invention is not limited to the following examples.

### (Example 1)

### (1) Carbon Fiber Tow

Carbon fiber tows manufactured by MITSUBISHI CHEMICAL CORPORATION were used (product number: PYROFILE TR 50S 15L, form: regular tow, filament count: 15K (15,000 filaments), filament diameter: 7 µm). An epoxy-based compound as a sizing agent was applied to the carbon fiber tows.

### (2) Spreading Tow

The tows were spread using a modified spreading device of FIG. 4. Fixed spreading bars and vibrating spreading bars were disposed alternately so that the carbon fiber filament groups passed through six spreading bars. The vibrating spreading bars were disposed on upper and lower sides. All the spreading bars had a vertically elongated oval cross section. The tension of the carbon fiber filament groups (tows) during the spreading process was 15 N per 15,000 filaments. In this manner, a spread fiber sheet including 50K carbon fiber filaments and having a spread width of 500 mm and a thickness of 0.2 mm was prepared.

### (3) Resin and Heat Treatment

Phenoxy resin (softening point: 180°C) was used as dry resin powder. The average particle diameter of the dry resin powder was 80 µm. The average amount of the resin applied to the spread carbon fiber sheet was 16.3 g on one surface (32.6 g on both surfaces) per 1 m² of the sheet. The temperatures inside heaters 11 and 15 were 220°C, and the residence times therein were 4 seconds each. The mass of the resultant resin-integrated fiber sheet was 82.6 g/m², with the fiber volume (Vf) being 50 vol% and the thermoplastic resin volume being 50 vol%. This volume ratio is a value theoretically calculated after resin impregnation. The volume ratio of the resin-integrated carbon fiber sheet itself cannot be calculated because the sheet contains air.

### (4) Evaluation of Resin-Integrated Carbon Fiber Sheet

The mass of the resultant resin-integrated carbon fiber sheet was 82.6 g/m². The number of the bridging fibers present in the direction across the carbon fiber sheet was 66 fibers per 10 mm² of the sheet, which is a value averaged at 10 spots.

A resin-integrated carbon fiber sheet having a length of 10 mm and a width of 50 mm was pulled in the direction perpendicular to the longitudinal direction of the sheet to compare tear resistance of each sheet.

### (Example 2)

Taws were spread in the same manner as in Example 1. The method described in WO 2018/038033, including surface treatment of carbon fiber filaments before spreading, hardly produces bridging fibers. A resin-integrated carbon fiber sheet of Example 2 was prepared and tested in the same manner as in Example 1 except that carbon fibers cut to 5.0 mm long on average were sprinkled on the carbon fiber sheet in an amount of about 5 mass% on one surface (about 10 mass% on the both surfaces) of the sheet just before sprinkling of the dry resin powder.

### (Comparative Example 1)

A resin-integrated carbon fiber sheet of Comparative Example 1 was prepared and tested in the same manner as in Example 2 except that carbon fibers cut in Example 2 were not sprinkled on the carbon fiber sheet.

The mass of the obtained resin-integrated carbon fiber sheet was 132.5 g/m². The resin-integrated carbon fiber sheet having a length of 150 mm and a width of 150 mm was hung with its ends in the width direction being held. The sheet cleaved, and the handleability was very poor.

As illustrated in FIG. 7, three spots were selected on each of a left side 27, a center 28 and a right side 29 of a resin-integrated carbon fiber sheet 26 of Example 1 as viewed widthwise of the roll, and photographs were taken using a scanning electron microscope. Three spots on each of the left side 27, the center 28 and the right side 29 of a sheet having a width of 500 mm were photographed using a scanning electron microscope (SEM). Three points were selected arbitrarily as targets. The three points were selected arbitrarily from each of the photographs of the three spots to check the bridging fibers visually.

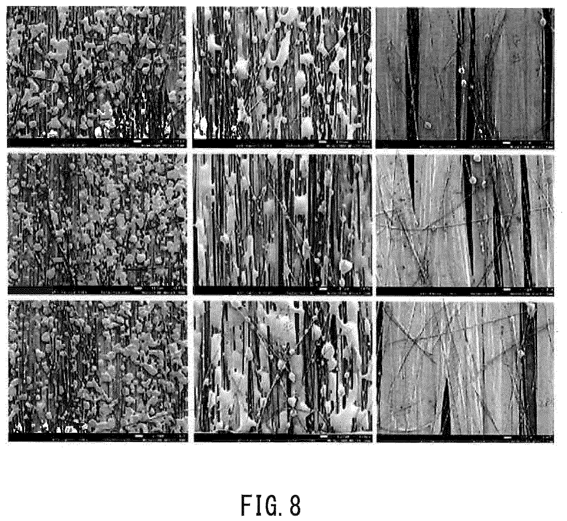

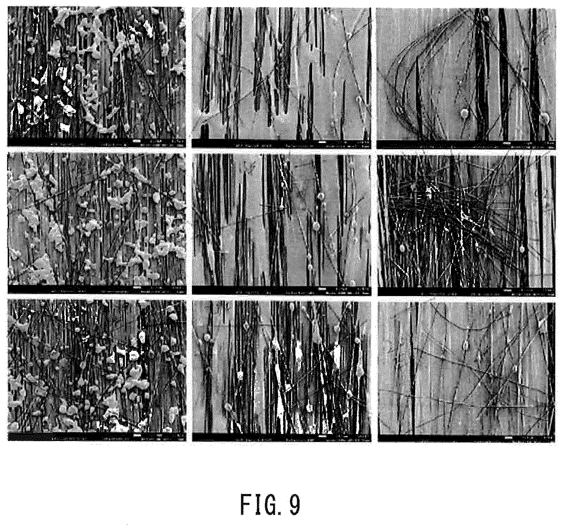

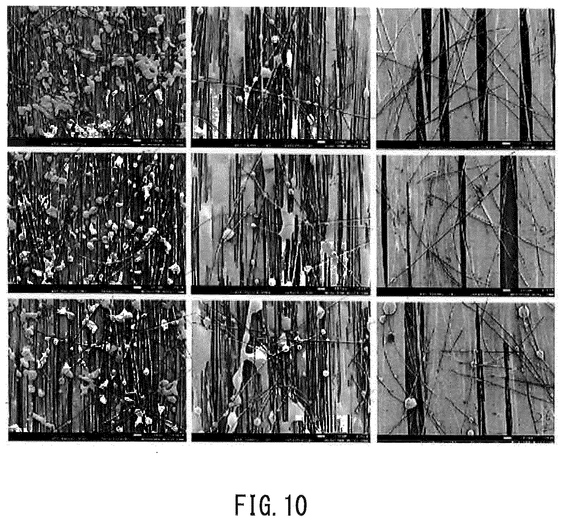

FIG. 8 shows plan photographs of the left side 27 of the resin-integrated carbon fiber sheet illustrated in FIG. 7 (each photograph: 50X magnification). FIG. 9 shows plan photographs of the center 28 of the resin-integrated carbon fiber sheet illustrated in FIG. 7 (each photograph: 50X magnification). FIG. 10 shows plan photographs of the right side 29 of the resin-integrated carbon fiber sheet illustrated in FIG. 7 (each photograph: 50X magnification). The measured range per point was a flat surface having 2.3 mm × 1.7 mm. Tables below show the results.

**[Table 1]**

| Left side | Photograph 1 | | | Photograph 2 | | | Photograph 3 | | |
|---|---|---|---|---|---|---|---|---|---|
| | 1 | 2 | 3 | 1 | 2 | 3 | 1 | 2 | 3 |
| The number of fibers | 21 | 30 | 21 | 25 | 23 | 25 | 19 | 20 | 26 |

**[Table 2]**

| Center | Photograph 1 | | | Photograph 2 | | | Photograph 3 | | |
|---|---|---|---|---|---|---|---|---|---|
| | 1 | 2 | 3 | 1 | 2 | 3 | 1 | 2 | 3 |
| The number of fibers | 26 | 20 | 29 | 13 | 15 | 21 | 27 | 52 | 20 |

**[Table 3]**

| Right side | Photograph 1 | | | Photograph 2 | | | Photograph 3 | | |
|---|---|---|---|---|---|---|---|---|---|
| | 1 | 2 | 3 | 1 | 2 | 3 | 1 | 2 | 3 |
| The number of fibers | 41 | 39 | 29 | 36 | 17 | 24 | 18 | 30 | 28 |

**[Table 4]**

| The number of fibers | Per 2.3 mm × 1.7 mm | Per area 10 mm² |
|---|---|---|
| Average | 25.7 | 65.7 |
| Max | 52 | 133.0 |
| Min | 13 | 33.2 |

### <Measurement of Tear Resistance>

The tear resistance of each carbon fiber sheet was measured by shaking the sheet lightly with a hand to evaluate the occurrence of tears based on the following criteria. The sample size of each resin-integrated carbon fiber sheet was 150 mm long and 150 mm wide.

### Evaluation criteria:

A: The sheet did not tear, and the condition was excellent.
B: The sheet partially tore but was good enough for practical use.
C: The sheet tore.

Table 5 summarizes the results.

**[Table 5]**

| Item | Example 1 | Example 2 | Comparative Example 1 |
|---|---|---|---|
| Tear resistance | A | B | C |

The sheets of Examples 1 and 2 were high in tear resistance, whereas the sheet of Comparative Example 1 tore immediately. Particularly, Example 1 in which the bridging fibers were generated achieved favorable results.

### Industrial Applicability

The spread carbon fiber sheet of the present invention can be widely applied to, e.g., blades for wind power generation, various sporting goods such as golf club shafts and fishing rods, aircrafts, automobiles, or pressure vessels.

### Description of Reference Numerals

- 1, 26, 30: Resin-integrated carbon fiber sheet
- 2: Carbon fiber sheet
- 3, 3a, 3b, 31-34: Bridging fiber
- 4: Resin
- 5: Part to which resin does not adhere
- 6: Spreading device
- 7: Feed bobbin
- 8: Carbon fiber filament group (carbon fiber tow before spreading)
- 9a, 9b, 9c: Nip roller
- 10a, 10b: Holding roller
- 11: Deflection space
- 12a-12d: Bridge roller
- 13a-13h: Guide roller
- 14, 17: Powder feed hopper
- 15, 18: Dry resin powder
- 16, 19: Heater
- 20: Take-up roller
- 21a-21j: Spreading roller
- 22: Air spreading process
- 23: Roller spreading process
- 24: Bridging fiber generating process
- 25: Resin powder applying process

## Claims

1. A resin-integrated carbon fiber sheet (1), comprising:
a carbon fiber sheet (2) comprising carbon fibers in which a carbon fiber filament group (8) is spread and arrayed in parallel in one direction;
resin (4) that is present on part of a surface of the carbon fiber sheet (2); and
bridging fibers (3; 3a, 3b) that are carbon fibers,
wherein one or more of the bridging fibers (3; 3a, 3b) is present on average on a surface of the carbon fiber sheet (2) in a direction across the carbon fiber sheet (2) per 10 mm² of the sheet,
the resin (4) on the surface adhesively fixes the bridging fibers (3; 3a, 3b) to the carbon fiber sheet (2),
the resin melt solidified adheres to the surface of the spread carbon fiber sheet (2) in a state of not being impregnated inside the carbon fiber sheet (2) or being partially impregnated in the carbon fiber sheet (2),
the resin integrated carbon fiber sheet (2) comprises the carbon fibers in an amount of 30 to 70% by volume based on 100% by volume of the resin integrated carbon fiber sheet (1), and
through formation of a fiber reinforced resin molded product using the resin integrated carbon fiber sheet (1), the resin is impregnated into the entire carbon fiber sheet (2) and serves as a matrix resin.

2. The resin-integrated carbon fiber sheet (1) according to claim 1, wherein the resin (4) is melt-solidified resin of at least one of a film resin, a non-woven fabric resin, a net resin, or resin powder.

3. The resin-integrated carbon fiber sheet (1) according to claim 1 or 2, wherein the bridging fibers (3; 3a, 3b) are at least one selected from the group consisting of carbon fibers separated from the carbon fiber filament group (8) and carbon fibers dropped on the carbon fiber sheet (20).

4. The resin-integrated carbon fiber sheet (1) according to any of claims 1 to 3, wherein the bridging fibers (3; 3a, 3b) are present on both surfaces of the carbon fiber sheet (2).

5. The resin-integrated carbon fiber sheet (1) according to any of claims 1 to 4, wherein the bridging fibers (3; 3a, 3b) are present also inside the carbon fiber sheet (2).

6. The resin-integrated carbon fiber sheet (1) according to any of claims 1 to 5, wherein the resin (4) is at least one selected from the group consisting of thermoplastic resin and thermosetting resin.

7. The resin-integrated carbon fiber sheet according to any of claims 1 to 6,
wherein the resin-integrated carbon fiber sheet (1) comprises the bridging fibers (3; 3a, 3b) in an amount of 0.01 to 25% by mass with respect to 100% by mass of the carbon fibers.

8. The resin-integrated carbon fiber sheet (1) according to any of claims 1 to 7, wherein a width of the carbon fiber sheet (2) is 0.1 to 5.0 mm per 1000 constituent carbon fibers of the carbon fiber filament group (8).

9. The resin-integrated carbon fiber sheet (1) according to any of claims 1 to 8, wherein the bridging fibers (3; 3a, 3b) have an average length of 1 mm or more.

10. A method for producing a resin-integrated carbon fiber sheet (1), comprising:
spreading a carbon fiber filament group (8) by at least one selected from the group consisting of passage through a plurality of rollers (23), passage through a spreading bar, and air spreading (22), and arraying the spread carbon fiber filament group (8) in parallel in one direction to prepare a carbon fiber sheet (2) comprising carbon fibers;
generating (24) bridging fibers that are carbon fibers from the carbon fiber filament group (8) during or after spreading of the carbon fiber filament group or dropping bridging fibers that are carbon fibers on the carbon fiber sheet (2) during or after spreading of the carbon fiber filament group (8) so that one or more of the bridging fibers is present on average per 10 mm² of the carbon fiber sheet (2); and
applying (25) resin powder to the carbon fiber sheet (2), heat-melting the resin powder in a pressure-free state and cooling it so that the resin is present on part of a surface of the carbon fiber sheet (2) in a state of not being impregnated inside the carbon fiber sheet or being partially impregnated in the carbon fiber sheet, and the resin on the surface adhesively fixes the bridging fibers to the carbon fiber sheet,
wherein the resin integrated carbon fiber sheet (1) comprises the carbon fibers in an amount of 30 to 70% by volume based on 100% by volume of the resin integrated carbon fiber sheet (1), and
through formation of a fiber reinforced resin molded product using the resin integrated carbon fiber sheet (1), the resin is impregnated into the entire carbon fiber sheet (2) and serves as a matrix resin.

11. The method according to claim 10, wherein the spreading bar or the rollers vibrate in a width direction of the carbon fiber filament group (8) during spreading (22; 23) of the carbon fiber filament group (8).

12. The method according to claim 10 or 11, wherein the resin powder is applied to the carbon fiber sheet (2) by dropping the resin powder on the carbon fiber sheet (2).

13. The method according to any of claims 10 to 12, wherein a plurality of the carbon fiber filament groups (8), each being wound on a bobbin, are fed, and opened and spread in the width direction of the carbon fiber filament groups (8) to form a single spread fiber sheet.

14. A method for producing a fiber reinforced resin molded product, comprising applying heat and pressure on a stack of a plurality of the resin integrated carbon fiber sheets (1) according to any of claims 1 to 9,
wherein the resin of the resin integrated carbon fiber sheets (1) is impregnated into the entire carbon fiber sheet (2) and serves as a matrix resin.

## Patentansprüche

1. Harzintegrierte Carbonfaser-Bahn (1), mit:
einer Carbonfaser-Bahn (2) mit Carbonfasern, in welcher eine Carbonfaser-Filamentgruppe (8) verteilt und in einer Richtung parallel angeordnet ist;
Harz (4), das auf einem Teil der Oberfläche der Carbonfaser-Bahn (2) vorhanden ist; und
Verbrückungsfasern (3; 3a, 3b), die Carbonfasern sind,
wobei im Durchschnitt eine oder mehrere der Verbrückungsfasern (3; 3a, 3b) pro 10 mm² der Bahn auf einer Oberfläche der Carbonfaser-Bahn (2) in einer Richtung quer zur Carbonfaser-Bahn (2) vorhanden sind,
das Harz (4) auf der Oberfläche die Verbrückungsfasern (3; 3a, 3b) klebend an der Carbonfaser-Bahn (2) fixiert,
die verfestigte Harzschmelze an der Oberfläche der verteilten Carbonfaser-Bahn (2) in einem Zustand haftet, ohne im Innern der Carbonfaser-Bahn (2) imprägniert zu sein oder teilweise in die Carbonfaser-Bahn (2) imprägniert ist, die Harz-integrierte Carbonfaser-Bahn (1) die Carbonfasern in einem Anteil von 30 bis 70 Volumen% bezogen auf 100 Volumen% der harzintegrierten Carbonfaser-Bahn (1) enthält, und
durch Bildung eines die Harz-integrierte Carbonfaser-Bahn (1) verwendenden Faser-verstärkten Harzformprodukts das Harz in die gesamte Carbonfaser-Bahn (2) eindringt und als Matrixharz dient.

2. Harzintegrierte Carbonfaser-Bahn (1) gemäß Anspruch 1, wobei das Harz (4) schmelz-erstarrtes Harz von wenigstens einem von Folienharz, Vliesstoff-Harz, Netz-Harz oder Harzpulver ist.

3. Harzintegrierte Carbonfaser-Bahn (1) gemäß Anspruch 1 oder 2, wobei die Verbrückungsfasern (3; 3a, 3b) wenigstens ein Ausgewähltes aus der Gruppe sind, die von der Carbonfaser-Filamentgruppe (8) abgetrennte Carbonfasern und auf die Carbonfaserbahn fallengelassene Fasern (20) umfasst.

4. Harzintegrierte Carbonfaser-Bahn (1) gemäß einem der Ansprüche 1 bis 3, wobei die Verbrückungsfasern (3; 3a, 3b) auf beiden Seiten der Carbonfaser-Bahn (2) vorhanden sind.

5. Harzintegrierte Carbonfaser-Bahn (1) gemäß einem der Ansprüche 1 bis 4, wobei die Verbrückungsfasern (3; 3a, 3b) auch innerhalb der Carbonfaser-Bahn (2) vorhanden sind.

6. Harzintegrierte Carbonfaser-Bahn (1) gemäß einem der Ansprüche 1 bis 5, wobei das Harz (4) wenigstens ein Ausgewähltes aus der Gruppe ist, die aus thermoplastischem Harz und wärmehärtendem Harz besteht.

7. Harzintegrierte Carbonfaser-Bahn gemäß einem der Ansprüche 1 bis 6, wobei die harzintegrierte Carbonfaser-Bahn (1) die Verbrückungsfasern (3; 3a, 3b) in einem Anteil von 0,01 bis 25 Massen% bezogen auf 100 Massen% der Carbonfasern enthält.

8. Harzintegrierte Carbonfaser-Bahn (1) gemäß einem der Ansprüche 1 bis 7, wobei eine Breite der Carbonfaser-Bahn (2) 0,1 bis 5,0 mm pro 1000 der konstituierenden Carbonfasern der Carbonfaser-Filamentgruppe (8) ist.

9. Harzintegrierte Carbonfaser-Bahn (1) gemäß einem der Ansprüche 1 bis 7, wobei die Verbrückungsfasern (3; 3a, 3b) eine durchschnittliche Länge von 1 mm oder mehr aufweisen.

10. Verfahren zum Herstellen einer Harz-integrierten Carbonfaser-Bahn (1), beinhaltend:
Verteilen einer Carbonfaser-Filamentgruppe (8) durch wenigstens ein Ausgewähltes aus der Gruppe, die aus Passieren mehrerer Walzen (23), Passieren durch einen Verteilerstab, und Luftverteilen (22) besteht, und paralleles Anordnen der verteilten Carbonfaser-Filamentgruppe (8) in einer Richtung, um eine Carbonfaser-Bahn (2) mit Carbonfasern bereitzustellen;
Erzeugen von Verbrückungsfasern (3; 3a, 3b), welche Carbonfasern von der Carbonfaser-Filamentgruppe (8) sind, bei oder nach dem Verteilen der Carbonfaser-Filamentgruppe (8), oder Fallenlassen von Verbrückungsfasern, welche Carbonfasern sind, auf die Carbonfaser-Bahn (2) bei oder nach dem Verteilen der Carbonfaser-Filamentgruppe (8) derart, dass eine oder mehrere der Verbrückungsfasern pro 10 mm² der Carbonfaser-Bahn (2) vorhanden sind;
und
Auftragen (25) von Harzpulver auf die Carbonfaser-Bahn (2), Heißschmelzen des Harzpulvers in einem drucklosen Zustand und Abkühlen dessen derart, dass das Harz auf einem Teil der Oberfläche der Carbonfaser-Bahn (2) in einem nicht in die Carbonfaser-Bahn (2) imprägnierenden Zustand vorhanden ist, oder teilweise in die Carbonfaser-Bahn (2) imprägniert ist, und das Harz an der Oberfläche die Verbrückungsfasern klebend an der Carbonfaser-Bahn fixiert, wobei die Harz-integrierte Carbonfaser-Bahn (1) die Carbonfasern in einem Anteil von 30 bis 70 Volumen% bezogen auf 100 Volumen% der harz-integrierten Carbonfaser-Bahn (1) enthält, und
durch Bildung eines die Harz-integrierte Carbonfaser-Bahn (1) verwendenden Faser-verstärkten Harzformprodukts das Harz in die gesamte Carbonfaser-Bahn (2) eindringt und als Matrixharz dient.

11. Verfahren gemäß Anspruch 10, wobei der Verteilerstab oder die Walzen beim Verteilen (22; 23) der Carbonfaser-Filamentgruppe (8) in einer Breitenrichtung der Carbonfaser-Filamentgruppe (8) vibrieren.

12. Verfahren gemäß Anspruch 10 oder 11, wobei das Harzpulver durch Herabfallenlassen des Harzpulvers auf die Carbonfaser-Bahn (2) auf die Carbonfaser-Bahn (2) aufgebracht wird.

13. Verfahren gemäß einem der Ansprüche 10 bis 12, wobei mehrere der Carbonfaser-Filamentgruppen (8), die jeweils auf einer Spule aufgewickelt sind, zugeführt werden, und geöffnet und in der Breitenrichtung der Carbonfaser-Filamentgruppen (8) verteilt werden, um eine einzige Verteilte-Fasern-Bahn zu bilden.

14. Verfahren zum Herstellen eines Faser-verstärkten Harzformprodukts, beinhaltend Beaufschlagen eines Stapels von mehreren Harz-integrierten Carbonfaser-Bahnen (1) gemäß einem der Ansprüche 1 bis 9 mit Wärme und Druck, wobei das Harz der Harz-integrierten Carbonfaser-Bahnen (1) in die ganze Carbonfaser-Bahn (2) imprägniert und als Matrixharz dient.

## Revendications

1. Feuille de fibre de carbone intégrée dans une résine (1), comprenant :
une feuille de fibre de carbone (2) comprenant des fibres de carbone dans lesquelles un groupe de filament de fibre de carbone (8) est étalé et disposé en réseau en parallèle dans une direction ;
une résine (4) qui est présente sur une partie d'une surface de la feuille de fibre de carbone (2) ; et des fibres de pontage (3 ; 3a, 3b) qui sont des fibres de carbone,
dans laquelle une ou plusieurs des fibres de pontage (3 ; 3a, 3b) sont présentes en moyenne sur une surface de la feuille de fibre de carbone (2) dans une direction transversale à la feuille de fibre de carbone (2) par 10 mm² de la feuille,
la résine (4) sur la surface fixe de manière adhésive les fibres de pontage (3 ; 3a, 3b) à la feuille de fibre de carbone (2),
la résine fondue solidifiée adhère à la surface de la feuille de fibre de carbone (2) étalée dans un état où elle n'est pas imprégnée à l'intérieur de la feuille de fibre de carbone (2) ou est partiellement imprégnée dans la feuille de fibre de carbone (2), la feuille de fibre de carbone (2) intégrée dans une résine comprend les fibres de carbone à raison de 30 à 70 % en volume sur la base de 100 % en volume de la feuille de fibre de carbone intégrée dans une résine (1), et
pendant la formation d'un produit moulé en résine renforcée de fibre à l'aide de la feuille de fibre de carbone intégrée dans une résine (1), la résine est imprégnée dans toute la feuille de fibre de carbone (2) et sert de résine de matrice.

2. Feuille de fibre de carbone intégrée dans une résine (1) selon la revendication 1, dans laquelle la résine (4) est une résine fondue-solidifiée d'au moins l'une parmi une résine de film, une résine de tissu non tissé, une résine de filet ou une poudre de résine.

3. Feuille de fibre de carbone intégrée dans une résine (1) selon la revendication 1 ou 2, dans laquelle les fibres de pontage (3 ; 3a, 3b) sont au moins l'une sélectionnée dans le groupe constitué de fibres de carbone séparées du groupe de filament de fibre de carbone (8) et de fibres de carbone déposées sur la feuille de fibre de carbone (20).

4. Feuille de fibre de carbone intégrée dans une résine (1) selon l'une quelconque des revendications 1 à 3, dans laquelle les fibres de pontage (3 ; 3a, 3b) sont présentes sur les deux surfaces de la feuille de fibre de carbone (2).

5. Feuille de fibre de carbone intégrée dans une résine (1) selon l'une quelconque des revendications 1 à 4, dans laquelle les fibres de pontage (3 ; 3a, 3b) sont également présentes à l'intérieur de la feuille de fibre de carbone (2).

6. Feuille de fibre de carbone intégrée dans une résine (1) selon l'une quelconque des revendications 1 à 5, dans laquelle la résine (4) est au moins l'une sélectionnée dans le groupe constitué de résine thermoplastique et de résine thermodurcissable.

7. Feuille de fibre de carbone intégrée dans une résine selon l'une quelconque des revendications 1 à 6, dans laquelle la feuille de fibre de carbone intégrée dans une résine (1) comprend les fibres de pontage (3 ; 3a, 3b) à raison de 0,01 à 25 % en poids par rapport à 100 % en poids des fibres de carbone.

8. Feuille de fibre de carbone intégrée dans une résine (1) selon l'une quelconque des revendications 1 à 7, dans laquelle la largeur de la feuille de fibre de carbone (2) est de 0,1 à 5,0 mm pour 1000 fibres de carbone constitutives du groupe de filament de fibre de carbone (8).

9. Feuille de fibre de carbone intégrée dans une résine (1) selon l'une quelconque des revendications 1 à 8, dans laquelle les fibres de pontage (3 ; 3a, 3b) ont une longueur moyenne de 1 mm ou plus.

10. Procédé de production d'une feuille de fibre de carbone intégrée dans une résine (1), comprenant : l'étalement d'un groupe de filament de fibre de carbone (8) par au moins l'un sélectionné dans le groupe constitué de passage à travers une pluralité de rouleaux (23), passage à travers une barre d'étalement, et étalement à l'air (22), et la disposition en réseau du groupe de filament de fibre de carbone (8) étalé en parallèle dans une direction afin de préparer une feuille de fibre de carbone (2) comprenant des fibres de carbone ;
la génération (24) de fibres de pontage qui sont des fibres de carbone à partir du groupe de filament de fibre de carbone (8) pendant ou après l'étalement du groupe de filament de fibre de carbone ou le dépôt des fibres de pontage qui sont des fibres de carbone sur la feuille de fibre de carbone (2) pendant ou après l'étalement du groupe de filament de fibre de carbone (8) de sorte qu'une ou plusieurs des fibres de pontage soient présentes en moyenne par 10 mm² de la feuille de fibre de carbone (2) ; et
l'application (25) d'une poudre de résine à la feuille de fibre de carbone (2), la thermofusion de la poudre de résine dans un état sans pression et le refroidissement de celle-ci de sorte que la résine soit présente sur une partie d'une surface de la feuille de fibre de carbone (2) dans un état où elle n'est pas imprégnée à l'intérieur de la feuille de fibre de carbone ou est partiellement imprégnée dans la feuille de fibre de carbone, et que la résine sur la surface fixe de manière adhésive les fibres de pontage à la feuille de fibre de carbone, dans lequel la feuille de fibre de carbone intégrée dans une résine (1) comprend les fibres de carbone à raison de 30 à 70 % en volume sur la base de 100 % en volume de la feuille de fibre de carbone intégrée dans une résine (1), et pendant la formation d'un produit moulé en résine renforcée de fibre à l'aide de la feuille de fibre de carbone intégrée dans une résine (1), la résine est imprégnée dans toute la feuille de fibre de carbone (2) et sert de résine de matrice.

11. Procédé selon la revendication 10, dans lequel la barre d'étalement ou les rouleaux vibrent dans une direction de la largeur du groupe de filament de fibre de carbone (8) pendant l'étalement (22 ; 23) du groupe de filament de fibre de carbone (8).

12. Procédé selon la revendication 10 ou 11, dans lequel la poudre de résine est appliquée à la feuille de fibre de carbone (2) par dépôt de la poudre de résine sur la feuille de fibre de carbone (2).

13. Procédé selon l'une quelconque des revendications 10 à 12, dans lequel une pluralité de groupes de filament de fibre de carbone (8), chacun étant enroulé sur une bobine, sont alimentés, et ouverts et étalés dans la direction de la largeur des groupes de filament de fibre de carbone (8) afin de former une seule feuille de fibres étalée.

14. Procédé de production d'un produit moulé en résine renforcée de fibre, comprenant l'application d'une chaleur et d'une pression à une pile d'une pluralité de feuilles de fibre de carbone intégrée dans une résine (1) selon l'une quelconque des revendications 1 à 9,
dans lequel la résine des feuilles de fibre de carbone intégrée dans une résine (1) est imprégnée dans toute la feuille de fibre de carbone (2) et sert de résine de matrice.
